# EUROPÄISCHE PATENTANMELDUNG

(11) **EP 4 844 503 A1**
(43) Veröffentlichungstag der Anmeldung: **25.11.2026**
(21) Anmeldenummer: 26178475.5
(22) Anmeldetag: 13.05.2026
(51) Int. Cl.: G05B 19/042, G05B 9/02, G05B 19/418

(54) **ENERGIESPARMODUL FÜR EINEN SICHERHEITSTECHNISCHEN SENSOR**

(30) Priorität: 20.05.2025 DE 102025119620
(71) Anmelder: Pilz GmbH & Co. KG, 73760 Ostfildern (DE)
(72) Erfinder: Loy, Stefan, 73760 Ostfildern (DE)
(74) Vertreter: Witte, Weller & Partner Patentanwälte mbB

(57) **Zusammenfassung**

Energiesparmodul (10) für einen sicherheitstechnischen Sensor (12), der zur Überwachung eines Gefahrenbereichs (34) vorgesehen ist und sicherheitsgerichtete Signale an eine Sicherheitssteuerung (14) abgibt. Das Energiesparmodul (10) weist eine erste Schnittstelle (18) zum Empfangen eines Energiesparsignals von einer externen Einrichtung (16) sowie eine Steuerlogik (20), die eingerichtet ist, bei Vorliegen des Energiesparsignals den sicherheitstechnischen Sensor (12) in einen Energiesparmodus zu versetzen, in dem eine Sensorfunktion des sicherheitstechnischen Sensors (12) zumindest zeitweise deaktiviert oder mit reduzierter Funktion betrieben wird, auf. Ferner verfügt das Energiesparmodul (10) über eine Simulationseinrichtung (22), die eingerichtet ist, während des Betriebs im Energiesparmodus simulierte sicherheitsgerichtete Signale bereitzustellen, sowie eine zweite Schnittstelle (24) zum Ausgeben der simulierten sicherheitsgerichteten Signale an die Sicherheitssteuerung (14).

## Beschreibung

Die vorliegende Offenbarung betrifft ein Energiesparmodul für einen sicherheitstechnischen Sensor, der zur Überwachung eines Gefahrenbereichs vorgesehen ist und sicherheitsgerichtete Signale an eine Sicherheitssteuerung abgibt, sowie ein entsprechendes Verfahren und System.

In automatisierten technischen Anlagen kommen sicherheitstechnische Sensoren in vielfältiger Weise zum Einsatz, um sicherzustellen, dass bei Annäherung oder Anwesenheit von Personen an gefährlichen Betriebseinrichtungen geeignete Schutzmaßnahmen eingeleitet werden können. Zu den typischen sicherheitstechnischen Sensoren zählen Lichtschranken, Laserscanner, Türzuhaltungen, Radarsysteme und weitere Sensoren, die zum Erfassen eines Zutritts oder Aufenthalts von Personen in einem Gefahrenbereich dienen. Diese Sensoren sind in der Regel mit einer Sicherheitssteuerung verbunden, die eingehende Signale auswertet und sicherheitsgerichtete Reaktionen, wie etwa das Stoppen einer Maschine oder das Sperren eines Zugangs, auslöst.

Ein wesentliches Merkmal solcher sicherheitstechnischer Sensoren ist ihre konstante Betriebsbereitschaft. Selbst in Betriebsphasen, in denen sich mit Sicherheit keine Personen in der Nähe eines Gefahrenbereichs befinden - etwa bei automatisierten Nachtschichten, während geplanter Produktionspausen oder in Bereichen mit rein maschineller Beladung - verbleiben die Sensoren häufig im aktivierten Zustand. Dies erfolgt aus Sicherheitsgründen, führt jedoch gleichzeitig zu einem kontinuierlichen Energieverbrauch der sicherheitstechnischen Einrichtung, selbst in Situationen, in denen deren Funktion temporär nicht benötigt wird.

Gleichzeitig steigt in der industriellen Praxis die Relevanz energieeffizienter Technologien und Betriebsweisen, nicht nur aus ökonomischen, sondern zunehmend auch aus ökologischen Erwägungen. In vielen Fällen zeigt sich jedoch, dass bestehende sicherheitstechnische Systeme nicht ohne Weiteres in einen energiesparenden Betriebszustand überführt werden können, ohne in sicherheitskritische Funktionen einzugreifen. Änderungen an der sicherheitsgerichteten Steuerung, insbesondere an Komponenten mit funktionaler Sicherheit gemäß einschlägigen Normen wie der Maschinenrichtlinie oder ISO 13849, sind mit erheblichem Aufwand, hoher technischer Komplexität und nicht zuletzt rechtlichen und zertifizierungsbezogenen Herausforderungen verbunden.

Aus dem Stand der Technik sind verschiedene Ansätze bekannt, mit denen versucht wurde, den Energieverbrauch sicherheitstechnischer Einrichtungen zu reduzieren. Dabei kommen beispielsweise Zugangssysteme zum Einsatz, die bei eindeutigem Ausschluss von Personen im Gefahrenbereich eine Abschaltung ermöglichen. Solche Lösungen erfordern jedoch meist tiefe Eingriffe in die bestehende Sicherheitsarchitektur und können zu einer Beeinträchtigung der CE-Konformität führen.

EP 3 385 920 A1 zeigt ein System und ein Verfahren zum Energiesparen in Zugangskontrollsystemen, insbesondere innerhalb von Gebäuden mit großer Anzahl an Zutrittslesern. Vorgeschlagen wird, dass ein Zugriffskontrollsystem seine Zugangskontrollleser, beispielsweise Kartenleser oder biometrische Lesegeräte, in einen Energiesparmodus versetzt, wenn erkannt wird, dass sich keine Personen im überwachten Bereich befinden. Die Erkennung kann dabei z. B. über eine Auswertung von Zutrittszählungen oder über ein angeschlossenes Alarmsystem erfolgen. Der Energiesparmodus wird durch gezieltes Abschalten der Stromversorgung einzelner Leser oder durch Senden eines "Schlaf"-Befehls realisiert. Dabei wird insbesondere zwischen Außenlesern und internen Lesern unterschieden, wobei bevorzugt nur letztere deaktiviert werden, um den Sicherheitsstandard aufrechtzuerhalten. Die Aktivierung der Geräte erfolgt bei erkannter Bewegung, Alarmzuständen oder manueller Entsperrung erneut. Die in EP 3 385 920 A1 offenbarten Maßnahmen betreffen ausschließlich Zugriffskomponenten zur Zutrittskontrolle, nicht jedoch sicherheitskritische Sensorik im Sinne der funktionalen Sicherheit nach Maschinenrichtlinie oder ISO 13849.

DE 10 2021 120 130 A1 zeigt ein Sicherheitssystem und ein entsprechendes Verfahren, bei dem ein Funkortungssystem in Kombination mit ortsauflösenden Sensoren eingesetzt wird, um abhängig von der Anwesenheit von Personen oder Objekten die Detektionsleistung dieser Sensoren situativ anzupassen. Das Funkortungssystem umfasst Funktransponder, die sich an Personen oder Objekten befinden, sowie stationäre Funkstationen zur Positionsbestimmung. Eine zentrale Steuer- und Auswerteeinheit ermittelt aus diesen Positionsdaten, ob sich eine Person oder ein Objekt in einem relevanten Schutzfeld befindet. Ist dies der Fall, wird der betreffende Sensor in einen uneingeschränkten Betriebsmodus mit voller Detektionsleistung versetzt. Ist dies nicht der Fall, so wird der Sensor in einen eingeschränkten Betrieb mit reduziertem Detektionsvermögen überführt, etwa durch reduzierte Abtastraten, abgeschaltete Beleuchtung oder geringere Prozessorlast. Wesentlich ist an dem in DE 10 2021 120 130 A1 offenbarten System, dass sich die sicherheitsrelevanten Eigenschaften des Sensors in Abhängigkeit von der Umgebungssituation verändern. Daraus ergibt sich die Notwendigkeit, das Sicherheitskonzept der jeweiligen Anwendung - einschließlich Risikobeurteilung und sicherheitstechnischer Validierung - auf diesen variablen Betriebszustand anzupassen.

EP 3 748 216 A1 zeigt eine Vorrichtung und ein Verfahren zur energieeffizienten Ausführung einer Sicherheitsfunktion. Vorgeschlagen wird, eine Schutzeinrichtung und eine Verarbeitungseinheit wahlweise in einem ersten Betriebsmodus mit hoher Güte oder in einem zweiten Betriebsmodus mit reduzierter Güte zu betreiben. Im zweiten Betriebsmodus werden Komponenten der Sicherheitsfunktion gezielt mit verringerter Leistung betrieben - etwa durch reduzierte Auflösung von Bildsensoren, verlängerte Reaktionszeiten oder Deaktivierung einzelner Verarbeitungsstränge -, wodurch Energie eingespart werden kann. Die Umschaltung zwischen den Modi kann dabei manuell, durch externe Steuerbefehle oder automatisch in Abhängigkeit vom Betriebszustand der überwachten technischen Anlage erfolgen. Auch ein Bereitschaftsbetrieb mit vollständig deaktivierter Sicherheitsfunktion ist vorgesehen. Auch bei dem in EP 3 748 216 A1 offenbarten System kann nach der Reduktion der Funktionalität eine neue sicherheitstechnische Beurteilung erforderlich werden, um die verbleibende Sicherheitsfunktion normgerecht bewerten und absichern zu können. Die reduzierte Ausführung wird nicht automatisch als gleichwertig zur Vollfunktion betrachtet, sondern muss in Abhängigkeit vom Anwendungsfall und dem aktuellen Betriebszustand risikobasiert neu bewertet werden.

Vor diesem Hintergrund besteht daher ein Bedarf an einer technischen Lösung, die es erlaubt, den Energieverbrauch sicherheitstechnischer Sensoren situationsabhängig zu senken, ohne dabei den Sicherheitsstandard der Anlage zu beeinträchtigen oder Änderungen an sicherheitsgerichteten Steuerkreisen erforderlich zu machen.

Es ist daher einer Aufgabe der vorliegenden Offenbarung, unter diesen Rahmenbedingungen die energieeffiziente Gestaltung des Betriebs sicherheitstechnischer Sensoren zu ermöglichen.

Diese Aufgabe wird gemäß einem ersten Aspekt gelöst durch für einen sicherheitstechnischen Sensor, der zur Überwachung eines Gefahrenbereichs vorgesehen ist und sicherheitsgerichtete Signale an eine Sicherheitssteuerung abgibt, umfassend: eine erste Schnittstelle zum Empfangen eines Energiesparsignals von einer externen Einrichtung, eine Steuerlogik, die eingerichtet ist, bei Vorliegen des Energiesparsignals den sicherheitstechnischen Sensor in einen Energiesparmodus zu versetzen, in dem eine Sensorfunktion des sicherheitstechnischen Sensors zumindest zeitweise deaktiviert oder mit reduzierter Funktion betrieben wird, eine Simulationseinrichtung, die eingerichtet ist, während des Betriebs im Energiesparmodus simulierte sicherheitsgerichtete Signale bereitzustellen, und eine zweite Schnittstelle zum Ausgeben der simulierten sicherheitsgerichteten Signale an die Sicherheitssteuerung.

Gemäß einem zweiten Aspekt wird die Aufgabe gelöst durch ein Verfahren zum energieeffizienten Betrieb eines sicherheitstechnischen Sensors, der zur Überwachung eines Gefahrenbereichs vorgesehen ist und sicherheitsgerichtete Signale an eine Sicherheitssteuerung abgibt, umfassend die Schritte:
- Empfangen eines Energiesparsignals von einer externen Einrichtung über eine erste Schnittstelle,
- Versetzen des sicherheitstechnischen Sensors durch eine Steuerlogik in einen Energiesparmodus, in dem eine Sensorfunktion zumindest zeitweise deaktiviert oder mit reduzierter Funktion betrieben wird,
- Simulieren der sicherheitsgerichteten Signale während des Energiesparmodus mittels einer Simulationseinrichtung, und
- Ausgeben der simulierten sicherheitsgerichteten Signale über eine zweite Schnittstelle an die Sicherheitssteuerung, sodass für die Sicherheitssteuerung ein ordnungsgemäßer Betrieb des Sensors vorgetäuscht wird.

Es ist somit eine Idee der vorliegenden Offenbarung, den Energieverbrauch sicherheitstechnischer Sensoren gezielt und situationsabhängig zu reduzieren, ohne dabei die Integrität oder Funktion der sicherheitsgerichteten Steuerung zu beeinträchtigen. Durch die Bereitstellung eines Energiesparmoduls, das in einen sicherheitstechnischen Sensor integriert oder diesem nachgeschaltet ist, kann der Sensor in einen Energiesparmodus versetzt werden, wenn feststeht, dass sich keine Personen im überwachten Gefahrenbereich aufhalten. Dabei bleibt die Verbindung zur Sicherheitssteuerung formal bestehen, da diese weiterhin Signale empfängt, die einem aktiven Sensorbetrieb entsprechen. Die Sicherheitssteuerung erkennt daher keinen Unterschied zwischen einem tatsächlich aktiven Sensor und dem Zustand, in dem der Sensor durch das Energiesparmodul simuliert wird.

Ein wesentliches Element dieser Lösung ist die Simulationseinrichtung, die während des Energiesparmodus sicherheitsgerichtete Signale bereitstellt, die denen des echten Sensors entsprechen. Diese simulierten Signale werden über eine zweite Schnittstelle an die Sicherheitssteuerung ausgegeben, wodurch ein kontinuierlicher, normgerechter Betrieb des Sicherheitskreises gewährleistet wird. Gleichzeitig erlaubt die Steuerlogik des Energiesparmoduls, den Sensor auf Grundlage eines von außen kommenden Energiesparsignals kontrolliert in einen reduzierten oder deaktivierten Betriebszustand zu versetzen. Dieses Energiesparsignal kann dabei durch unterschiedliche externe Einrichtungen, wie etwa Zugangskontrollsysteme, übergeordnete Steuerungen oder zeitorientierte Auslöselogiken bereitgestellt werden.

Durch diese Architektur wird es möglich, bestehende sicherheitstechnische Infrastrukturen zu ergänzen, ohne in die zertifizierte sicherheitstechnische Steuerung eingreifen zu müssen. Insbesondere erlaubt die Trennung zwischen physischer Sensorfunktion und dem simulierten Ausgangssignal eine flexible und rückwirkungsfreie Energiesparschaltung. Die Lösung eignet sich somit insbesondere für den Einsatz in automatisierten Bereichen, in denen der Gefahrenbereich über längere Zeiträume hinweg frei von Personen ist. Die beanspruchte Lösung stellt damit eine praxistaugliche und rechtlich unkritische Möglichkeit dar, den Energiebedarf von Sicherheitssystemen substanziell zu senken, ohne das sicherheitstechnische Gesamtkonzept zu verändern oder die CE-Konformität zu gefährden.

In einer weiteren Ausgestaltung kann die Simulationseinrichtung dazu eingerichtet sein, im Energiesparmodus ausbleibende sicherheitsgerichtete Signale des sicherheitstechnischen Sensors durch simulierte sicherheitsgerichtete Signale zu ersetzen, um der Sicherheitssteuerung einen normalen Betrieb des Sensors vorzutäuschen.

Gemäß dieser Ausgestaltung wird erreicht, dass der Übergang des Sensors in einen Energiesparmodus für die Sicherheitssteuerung transparent bleibt. Die Sicherheitslogik erkennt somit keine Veränderung in der Systemtopologie oder Signalverfügbarkeit. Dadurch bleibt die Funktionsweise des Sicherheitskreises unberührt, was insbesondere im Hinblick auf Zertifizierungen, wie CE-Konformität oder Maschinenrichtlinien, von erheblicher Bedeutung ist. Zudem kann ein Eingriff in sicherheitsgerichtete Steuerungen vermieden werden, was Aufwand, Kosten und Risiken reduziert.

In einer weiteren Ausgestaltung kann vorgesehen sein, dass die simulierten sicherheitsgerichteten Signale einem Echtzeitprotokoll des sicherheitstechnischen Sensors entsprechen und beispielsweise zyklisch mit einem vorgegebenen Taktsignal ausgegeben werden.

Gemäß dieser Ausgestaltung kann die Simulationseinrichtung so betrieben werden, dass sie die Kommunikationscharakteristik eines realen Sensors nachbildet. Sicherheitssteuerungen erwarten in vielen industriellen Anwendungen eine exakte Signalstruktur, insbesondere bei zyklischer Überwachung oder bei OSSD-Signalen. Durch die Einhaltung des zeitlichen Takts und der Signalform können Signalverläufe erzeugt werden, die vom Originalsignal technisch nicht zu unterscheiden sind. Dadurch wird die Kompatibilität zu bestehenden Anlagen und Steuerungssystemen sichergestellt.

In einer weiteren Ausgestaltung kann die Steuerlogik eingerichtet sein, den sicherheitstechnischen Sensor in definierten, insbesondere in regelmäßigen, Zeitabständen kurzzeitig zu aktivieren, um eine Funktionsprüfung durchzuführen.

Gemäß dieser Ausgestaltung wird eine intermittierende Prüfung des Sensors selbst ermöglicht, auch während längerer Energiesparphasen. Dies gewährleistet, dass etwaige Ausfälle oder Störungen der Sensorhardware erkannt werden, selbst wenn der Sensor über längere Zeiträume hinweg deaktiviert ist. Damit bleibt die Systemintegrität auch im reduzierten Energiezustand gewährleistet und es wird sichergestellt, dass die Simulation weiterhin auf validen Daten und einem funktionstüchtigen Sensor basiert.

In einer weiteren Ausgestaltung kann das Energiesparmodul eine dritte Schnittstelle zum Empfangen eines Testsignals aufweisen, wobei die Steuerlogik eingerichtet ist, bei Vorliegen des Testsignals die simulierten sicherheitsgerichteten Signale für einen Testfall anzupassen.

Gemäß dieser Ausgestaltung wird es möglich, gezielt Testzustände im sicherheitstechnischen System durchzuführen, etwa im Rahmen von Wartung, Inbetriebnahme oder zyklischer Selbstüberwachung. Die Anpassung der simulierten Signale kann dann gezielt auf Prüfzustände abgestimmt werden, ohne dass die tatsächliche Sensorfunktion reaktiviert werden muss. Dies trägt zur Flexibilität und Testbarkeit der gesamten Sicherheitsarchitektur bei.

In einer weiteren Ausgestaltung kann die Steuerlogik dazu eingerichtet sein, die simulierten sicherheitsgerichteten Signale nur dann an den Testfall anzupassen, wenn eine Funktionsprüfung des sicherheitstechnischen Sensors erfolgreich war.

Gemäß dieser Ausgestaltung wird sichergestellt, dass eine Anpassung der Simulationssignale für Testzwecke nur dann erfolgt, wenn der sicherheitstechnische Sensor tatsächlich noch funktionsfähig ist. Dies erhöht die funktionale Sicherheit des Systems und verhindert, dass bei einem fehlerhaften sicherheitstechnischen Sensor ein funktionsfähiger Sensor simuliert wird.

In einer weiteren Ausgestaltung kann vorgesehen sein, dass das Energiesparsignal von einem Zugangskontrollsystem, einer Anwesenheitserkennung oder einer übergeordneten Steuerungseinheit generiert wird.

Gemäß dieser Ausgestaltung lässt sich der Energiesparmodus gezielt durch externe Umgebungsinformationen oder betriebliche Rahmenbedingungen auslösen. Beispielsweise kann durch ein Zugangssystem festgestellt werden, ob Personen Zutritt zu einem bestimmten Bereich haben, sodass bei deren Abwesenheit automatisch in einen Energiesparbetrieb geschaltet werden kann. Dies macht das Gesamtsystem adaptiv und erhöht das Potenzial zur Energieeinsparung in realen Betriebsumgebungen. Das Energiesparsignal kann manipulationssicher ausgeführt sein. Insbesondere kann es sich dabei um ein reguläres, vorzugsweise redundantes Ausgangssignal eines sicherheitsgerichteten Meldegeräts, wie beispielsweise eines Türschalters, handeln. Das Energiesparsignal kann zum Beispiel ein OSSD-Signal (Output Signal Switching Device) sein.

In einer weiteren Ausgestaltung kann die Steuerlogik eingerichtet sein, anhand vordefinierter Zeitintervalle oder Benutzerprofile den Energiesparmodus automatisch zu aktivieren oder zu deaktivieren.

Gemäß dieser Ausgestaltung kann das System zeit- oder schichtbasiert in eine energiesparende Betriebsart wechseln, etwa nachts, an Wochenenden oder während geplanter Produktionspausen. Die Konfiguration über Benutzerprofile erlaubt zudem eine anwendungsspezifische Anpassung ohne Eingriff in die Steuerungstechnik. Dies erhöht den Automatisierungsgrad und reduziert den Bedarf manueller Eingriffe.

In einer weiteren Ausgestaltung kann die Steuerlogik eingerichtet sein, auf eine Künstliche Intelligenz zuzugreifen, welche auf Basis von Prozessdaten oder Bewegungsmustern vorhersagt, ob sich Personen im Gefahrenbereich befinden, und den Energiesparmodus in Abhängigkeit dieser Vorhersage automatisch zu aktivieren oder zu deaktivieren.

Gemäß dieser Ausgestaltung kann das System auf komplexe Datenstrukturen und sensorübergreifende Informationen zugreifen, um auf Basis intelligenter Algorithmen Entscheidungen zum Betriebszustand des sicherheitstechnischen Sensors zu treffen. Dies erlaubt eine besonders effiziente Nutzung des Energiesparpotenzials, ohne Kompromisse bei der Sicherheit einzugehen. Die KI-basierte Auswertung bietet zudem Potenzial für selbstlernende Optimierung und situationsspezifische Anpassungen.

In einer weiteren Ausgestaltung kann die Simulationseinrichtung eingerichtet sein, auf zuvor während eines Normalbetriebs aufgezeichnete Kommunikationsdaten des sicherheitstechnischen Sensors zurückzugreifen, um auf deren Grundlage in dem Energiesparmodus die simulierten sicherheitsgerichteten Signale zu erzeugen.

Gemäß dieser Ausgestaltung werden realitätsnahe Simulationssignale bereitgestellt, da sie auf tatsächlichen Messdaten und Kommunikationsabläufen des Sensors basieren. Dies erhöht die Authentizität der Simulation und verringert die Wahrscheinlichkeit, dass die Sicherheitssteuerung Unregelmäßigkeiten detektiert. Gleichzeitig wird die Nachrüstbarkeit bei bestehenden Anlagen verbessert, da die notwendige Kommunikationsstruktur einfach durch Monitoring erfasst und ohne Änderungen in der Steuerung weiterverwendet werden kann.

In einer weiteren Ausgestaltung kann das Energiesparmodul als integrierter Bestandteil des sicherheitstechnischen Sensors ausgebildet sein.

Gemäß dieser Ausgestaltung wird eine besonders kompakte Bauform des Systems ermöglicht, bei der sämtliche Komponenten des Energiesparmoduls direkt im Gehäuse des sicherheitstechnischen Sensors untergebracht sind. Dies vereinfacht die Installation, reduziert den Verkabelungsaufwand und minimiert potenzielle Fehlerquellen durch externe Verbindungen. Insbesondere bei Neuentwicklungen von Sensorhardware kann diese Variante ohne zusätzliche Montagefläche oder separate Steuerbox realisiert werden und ermöglicht damit eine optimale Integration in bestehende industrielle Sicherheitslösungen.

In einer weiteren Ausgestaltung kann das Energiesparmodul als separate, vom sicherheitstechnischen Sensor unabhängige Einheit ausgestaltet sein, die zwischen dem Sensor und der Sicherheitssteuerung angeordnet ist.

Gemäß dieser Ausgestaltung wird eine Nachrüstung bestehender Systeme erleichtert, ohne Änderungen am sicherheitstechnischen Sensor selbst vorzunehmen. Das Energiesparmodul kann als Inline-Komponente in die bestehende Signalverbindung zwischen Sensor und Steuerung integriert werden und übernimmt dabei eigenständig die Steuerung des Energiesparmodus und die Signal-Simulation. Diese Bauform eignet sich besonders für Retrofit-Anwendungen in Bestandsanlagen, bei denen Änderungen am zertifizierten Sensorgehäuse vermieden werden sollen.

In einer weiteren Ausgestaltung kann vorgesehen sein, dass die sicherheitsgerichteten Signale, die vom sicherheitstechnischen Sensor in einem Normalbetrieb erzeugt werden, redundante OSSD-Signale (Output Signal Switching Device) sind, und dass die Simulationseinrichtung eingerichtet ist, während des Energiesparmodus OSSD-kompatible Ausgangssignale zu erzeugen, welche die OSSD-Signale des Sensors vollständig ersetzen.

Gemäß dieser Ausgestaltung wird die Kompatibilität zu gängigen industriellen Sicherheitssystemen sichergestellt, da OSSD-Signale ein weit verbreiteter Standard für sichere Schaltausgänge sind. Durch die Simulation OSSD-konformer Signale kann das Energiesparmodul ohne Anpassung in Steuerungskreise mit typischen Sicherheitsrelais oder sicheren Eingangsmodulen eingebunden werden. Gleichzeitig wird gewährleistet, dass die funktionale Sicherheit aufrechterhalten bleibt und der Sicherheitskreis aus Sicht der Steuerung lückenlos und normkonform weiterbetrieben wird.

In einer weiteren Ausgestaltung kann die Simulationseinrichtung so ausgestaltet sein, dass beim Übergang des sicherheitstechnischen Sensors in den Energiesparmodus eine unterbrechungsfreie Fortführung der sicherheitsgerichteten Signale erfolgt, wobei die simulierten Signale nahtlos an die zuvor vom Sensor erzeugten Signale anschließen, sodass für die Sicherheitssteuerung kein Übergang oder Funktionswechsel erkennbar ist.

In einer weiteren Ausgestaltung kann das Energiesparmodul dazu eingerichtet sein, eine Verbindung zwischen dem Sensor und der Sicherheitssteuerung während des Betriebs im Energiesparmodus aufzutrennen.

Gemäß dieser Ausgestaltung wird erreicht, dass der sicherheitstechnische Sensor im Energiesparmodus vollständig von der Signalverarbeitung entkoppelt wird. Durch das gezielte Trennen der Verbindung wird verhindert, dass der deaktivierte oder nur teilweise aktive Sensor fehlerhafte oder unerwartete Signale an die Sicherheitssteuerung übermittelt, die zu Fehldiagnosen oder unerwünschten Reaktionen im Sicherheitskreis führen könnten. Dies ist insbesondere dann vorteilhaft, wenn der Sensor im Energiesparmodus nicht garantiert ein normkonformes Ausgangssignal liefert.

Gemäß dieser Ausgestaltung kann ferner die Signalintegrität der simulierten sicherheitsgerichteten Signale verbessert werden, da keine Überlagerung oder Beeinflussung durch Restsignale des realen Sensors auftritt. Das gezielte Auftrennen der Verbindung schafft eine saubere Trennung zwischen dem Simulationspfad und der realen Sensorik und ermöglicht so eine zuverlässige, nachvollziehbare Systemarchitektur. Dies kann sowohl aus funktionaler als auch aus sicherheitstechnischer Sicht die Transparenz und Prüfbarkeit des Gesamtsystems erhöhen.

Gemäß dieser Ausgestaltung wird ein kontinuierliches Signalverhalten realisiert, bei dem es zu keinem erkennbaren Sprung, Aussetzer oder Zustandwechsel in der Sicherheitssteuerung kommt. Dies ist insbesondere bei Systemen mit Diagnosefunktionen oder Taktüberwachung relevant, da hier schon kleinste Signalabweichungen als Fehler gewertet und zu einer Sicherheitsabschaltung führen können. Durch die nahtlose Signalfortführung erhöht sich die Zuverlässigkeit des Gesamtsystems und die Lösung eignet sich auch für hochverfügbare Anwendungen in sensiblen Industrieumgebungen.

Gemäß einem dritten Aspekt der vorliegenden Offenbarung wird die Aufgabe ferner gelöst durch ein System zur sicherheitstechnischen Überwachung eines Gefahrenbereichs unter gleichzeitiger Möglichkeit zur Reduktion des Energieverbrauchs, umfassend: das zuvor genannte Energiesparmodul, einen sicherheitstechnischen Sensor, der dazu eingerichtet ist, im Normalbetrieb sicherheitsgerichtete Signale an eine Sicherheitssteuerung abzugeben, eine Sicherheitssteuerung, die zur Auswertung der sicherheitsgerichteten Signale und zur Durchführung sicherheitsgerichteter Reaktionen konfiguriert ist, sowie eine externe Einrichtung, die eingerichtet ist, ein Energiesparsignal an das Energiesparmodul zu übermitteln.

So ergibt sich ein vollständiges System, das alle für den sicheren und zugleich energieeffizienten Betrieb erforderlichen Komponenten umfasst. Durch das Zusammenwirken von Sensor, Energiesparmodul, externer Signaleinheit und Sicherheitssteuerung wird ein anwendungsbereites Gesamtkonzept realisiert, das sowohl für Neuanlagen als auch für Retrofit-Lösungen geeignet ist. Besonders vorteilhaft ist, dass die extern bereitgestellten Energiesparsignale in das System eingebunden werden können, ohne die sicherheitsgerichtete Steuerung anpassen zu müssen.

In einer weiteren Ausgestaltung kann vorgesehen sein, dass die externe Einrichtung ein Zugangskontrollsystem, eine Steuerungseinheit, eine Zeitsteuerung oder ein Ortungssystem ist.

Gemäß dieser Ausgestaltung werden gängige industrielle Infrastrukturkomponenten genutzt, um den Energiesparmodus gezielt und kontextabhängig zu steuern. Zugangssysteme können etwa feststellen, ob sich Personen in einem Gefahrenbereich befinden oder nicht. Steuerungseinheiten können im Produktionsverlauf Signale für nicht genutzte Maschinenabschnitte ausgeben, und Zeitsteuerungen ermöglichen die Integration in betrieblich definierte Arbeits- oder Pausenzeiten. Ebenso erlaubt ein Ortungssystem eine automatische Erkennung von Personenbewegungen und damit eine besonders flexible, intelligente Steuerung des Sensorbetriebs.

In einer weiteren Ausgestaltung kann das Energiesparmodul in den sicherheitstechnischen Sensor integriert sein und gemeinsam mit diesem eine einheitliche Baueinheit bilden.

Gemäß dieser Ausgestaltung wird eine besonders platzsparende und robuste Lösung geschaffen, bei der alle Funktionen innerhalb eines einzigen Gehäuses untergebracht sind. Dies erleichtert nicht nur die Montage, sondern reduziert auch potenzielle Störquellen durch externe Verbindungselemente. Die einheitliche Baueinheit kann darüber hinaus als neues Produkt vermarktet und in sicherheitstechnischen Kataloglösungen aufgenommen werden, ohne dass eine zusätzliche Gerätegruppe erforderlich ist.

In einer weiteren Ausgestaltung kann bei dem System vorgesehen sein, dass der sicherheitstechnische Sensor über einen zusätzlichen Eingangsanschluss verfügt, der zum Empfangen des Energiesparsignals von der externen Einrichtung ausgebildet und mit der ersten Schnittstelle des Energiesparmoduls gekoppelt ist.

Gemäß dieser Ausgestaltung wird eine klare Trennung der Signale gewährleistet, bei gleichzeitiger Integration der Energiesparfunktion in die Hardwarestruktur des Sensors. Der zusätzliche Eingang kann gezielt so ausgelegt sein, dass er nur auf autorisierte Signale reagiert, etwa durch Signalfilterung oder sicherheitsgerichtete Codierung. Dies erhöht die Systemsicherheit und vereinfacht zugleich die Implementierung in bestehende Sensornetzwerke.

In einer weiteren Ausgestaltung kann die zweite Schnittstelle des Energiesparmoduls mit einem oder mehreren Ausgangsanschlüssen, über die der sicherheitstechnische Sensor in einem Normalbetrieb die sicherheitsgerichteten Signale an die Sicherheitssteuerung abgibt, gekoppelt sein.

Gemäß dieser Ausgestaltung übernimmt das Energiesparmodul im Energiesparmodus die Rolle des Sensorsignalausgangs vollständig, ohne dass aus Sicht der Sicherheitssteuerung ein Unterschied besteht. Die Kopplung an die bestehenden Ausgangsanschlüsse erlaubt dabei eine besonders einfache Integration, da keine zusätzlichen Verbindungswege oder Änderungen an der Steuerung erforderlich sind. Dies erleichtert sowohl die Nachrüstung als auch die Serienintegration erheblich.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Die einzelnen Elemente der Erfindung können modular miteinander kombiniert werden, wobei insbesondere die Wahl der Signalwege, Steuerungsarten oder der physikalischen Integration des Energiesparmoduls flexibel an unterschiedliche Anwendungsfälle angepasst werden kann.

Ausführungsbeispiele der Erfindung sind in der Zeichnung dargestellt und werden in der nachfolgenden Beschreibung näher erläutert. Diese Zeichnungen dienen dem besseren Verständnis der Erfindung und zeigen bevorzugte, jedoch nicht ausschließlich zu verstehende Realisierungen der beanspruchten technischen Lehre.
Fig. 1 zeigt in schematischer Darstellung ein Ausführungsbeispiel eines Energiesparmoduls gemäß der vorliegenden Offenbarung.
Fig. 2 zeigt ein Anwendungsszenario für ein System gemäß der vorliegenden Offenbarung.
Fig. 3 zeigt ein Ablaufdiagramm eines Verfahrens zum energieeffizienten Betrieb eines sicherheitstechnischen Sensors gemäß einem Ausführungsbeispiel der vorliegenden Offenbarung.

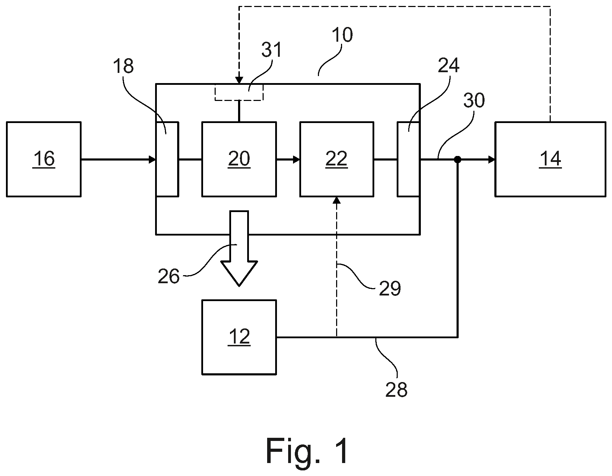

Fig. 1 zeigt in schematischer Darstellung ein Ausführungsbeispiel eines Energiesparmoduls sowie eines Systems zur energieeffizienten sicherheitstechnischen Überwachung eines Gefahrenbereichs.

Das dargestellte System umfasst ein Energiesparmodul 10, das zwischen einer externen Einrichtung 16 und einer Sicherheitssteuerung 14 angeordnet ist. Die externe Einrichtung 16 ist in diesem Ausführungsbeispiel als Zugangskontrollsystem, etwa auf Basis eines RFID- oder BLE-Ortungssystems, ausgebildet. Alternativ kann die externe Einrichtung 16 auch eine übergeordnete SPS, ein Zeitsteuerrechner oder eine Kl-gestützte Anwesenheitserkennung sein, die auf Basis von Produktionsdaten oder Bewegungsmustern entscheidet, ob sich Personen im überwachten Bereich befinden oder nicht. Die Einrichtung 16 ist dazu eingerichtet, ein Energiesparsignal zu erzeugen und dieses über eine erste Schnittstelle 18 an das Energiesparmodul 10 zu übermitteln.

Im Inneren des Energiesparmoduls 10 ist eine Steuerlogik 20 vorgesehen, welche das eintreffende Energiesparsignal verarbeitet. Diese Steuerlogik kann beispielsweise als Mikrocontroller, FPGA oder als in eine sicherheitsgerichtete Software implementierte Funktionslogik ausgeführt sein. Sie entscheidet, ob und wann der angeschlossene sicherheitstechnische Sensor 12 in einen Energiesparmodus überführt wird. Der Sensor 12 kann beispielsweise ein Lichtvorhang, ein Radarsensor, ein Sicherheitslaserscanner, eine Türzuhaltung oder ein kapazitiver Annäherungssensor sein. Insbesondere kann der Sensor 12 auch als sogenannter Smart Sensor ausgeführt sein, etwa als sicheres kamerabasiertes Bildverarbeitungssystem oder als sicherheitsgerichteter Radarsensor, bei dem neben der eigentlichen Sensoreinheit auch eine aufwendige integrierte Signalauswertung im Gerät selbst erfolgt. Solche Systeme verwenden häufig komplexe Algorithmen zur Objektklassifikation, Tiefenberechnung oder Bewegungsanalyse und verfügen über eigene Prozessoren, Bildsensorik oder KI-basierte Entscheidungslogik. Gerade diese Sensortypen weisen im aktiven Zustand einen vergleichsweise hohen Energiebedarf auf, was sie zu bevorzugten Kandidaten für die hier vorgeschlagene temporäre Deaktivierung im Energiesparmodus macht. Die Steuerlogik 20 sendet bei Vorliegen geeigneter Bedingungen ein Steuersignal über eine Verbindung 26 an den Sensor 12, wodurch dieser zumindest teilweise deaktiviert oder in einen stromsparenden Zustand überführt wird.

Parallel dazu ist eine Simulationseinrichtung 22 vorgesehen, die im Energiesparmodus des Sensors 12 aktiviert wird. Diese Simulationseinrichtung kann als programmierbare Logikeinheit oder als in die Steuerlogik integriertes Softwaremodul ausgeführt sein. Sie erzeugt simulierte sicherheitsgerichtete Signale, die die typischen Ausgangssignale des Sensors 12 nachbilden. Dies können etwa OSSD-Signale, digitale Sicherheitsbits, IO-Link Safety-Kommunikation oder spezifizierte Puls-Pausen-Signale sein. Grundsätzlich können die Ausgangsignale auch feste Potenziale sein.

Die simulierten Signale werden über eine zweite Schnittstelle 24 und eine Signalleitung 30 an die Sicherheitssteuerung 14 weitergeleitet. Die Sicherheitssteuerung 14 ist dabei als bekannte Sicherheits-SPS oder als Evaluierungsmodul ausgeführt. Die Sicherheitssteuerung 14 erkennt keinen Unterschied zwischen echten und simulierten Signalen, wodurch der Sicherheitskreis weiterhin als geschlossen und normgerecht interpretiert wird.

In einer vorteilhaften Ausgestaltung kann die Simulationseinrichtung 22 auf zuvor während des Normalbetriebs über eine Verbindung 28 zwischen dem Sensor 12 und der Sicherheitsteuerung 14 aufgezeichnete Kommunikationsdaten des Sensors 12 zurückgreifen (hier durch den gestrichelte Pfeil 29 angedeutet). Dadurch ist gewährleistet, dass die simulierten Signale auf realen, anlagenspezifischen Mustern basieren und somit eine hohe Authentizität besitzen. Dies verbessert insbesondere die Kompatibilität zu sicherheitsgerichteten Steuerungen, die auf zeitgenaue Signalmuster angewiesen sind.

Darüber hinaus kann das Energiesparmodul 10 dazu eingerichtet sein, die Verbindung 28 zwischen dem Sensor 12 und der Sicherheitssteuerung 14 während des Betriebs im Energiesparmodus aufzutrennen. Es versteht sich, dass es sich bei der Verbindung 28 sowie der Signalleitung 30 nicht zwingend um jeweils einzelne Leitungen handeln muss. Vielmehr können auch mehradrige oder redundante Signalverbindungen unter diese Begriffe fallen, über die die entsprechende Datenübertragung realisiert wird.

Das Energiesparmodul 10 kann ferner eine optionale dritte Schnittstelle 31 aufweisen, die im Folgenden auch als Testeingang bezeichnet wird und dazu eingerichtet ist, ein Testsignal zu empfangen. Dieses Testsignal kann von der Sicherheitssteuerung 14 selbst oder von einer separaten, sicherheitstechnisch zugelassenen Testeinheit erzeugt werden. Bei einem solchen Testsignal handelt es sich typischerweise um ein Signal, das dem sicherheitstechnischen Sensor 12 im Normalbetrieb zugeführt wird, um dessen Reaktionsfähigkeit zu überprüfen. Der Sensor muss dabei auf definierte Weise reagieren - etwa durch ein spezifisches Ausgangssignal oder eine erwartete Signalveränderung -, sodass die Sicherheitssteuerung aus dem korrekten Verhalten auf die Funktionsfähigkeit des Sensors schließen kann.

Um diese Art der systemseitigen Selbstüberwachung auch im Energiesparmodus des Sensors beizubehalten, ist das Energiesparmodul 10 dazu eingerichtet, das Testsignal über den Testeingang 31 entgegenzunehmen und daraufhin die simulierten sicherheitsgerichteten Signale testtypisch anzupassen. Auf diese Weise kann die Sicherheitssteuerung auch im Zustand der Sensorabschaltung eine gültige Rückmeldung erhalten, als würde sich der Sensor im aktiven Zustand befinden. In einer bevorzugten Ausführung kann vorgesehen sein, dass die Anpassung der simulierten Signale nur dann erfolgt, wenn zuvor in definierten Zeitabständen eine kurzzeitige Aktivierung des Sensors vorgenommen und dabei ein erfolgreicher Funktionstest durchgeführt wurde. So wird sichergestellt, dass die Simulation des Testverhaltens nur auf Basis eines tatsächlich funktionsfähigen Sensors erfolgt. Die Testlogik kann dabei so ausgelegt sein, dass ein fehlgeschlagener Funktionstest zur Unterdrückung des Simulationssignals oder zur Ausgabe eines Fehlerzustands führt.

Diese Testmöglichkeit erlaubt eine kompatible Integration in bestehende sicherheitstechnische Prüfzyklen, ohne dass die Simulation durch das Energiesparmodul eine funktionale Lücke in der Sicherheitsbewertung verursacht. Das System bleibt somit auch im reduzierten Sensorbetrieb normgerecht testbar und erfüllt die Anforderungen an die regelmäßige Verifikation von Sicherheitsfunktionen.

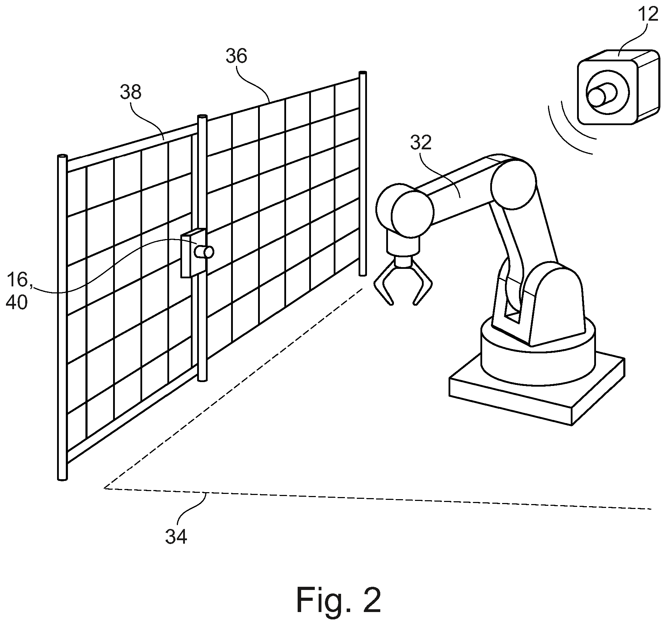

Fig. 2 zeigt ein Anwendungsszenario für ein System gemäß der vorliegenden Offenbarung zur sicherheitstechnischen Überwachung eines Gefahrenbereichs 34, in dem ein Industrieroboter 32 betrieben wird. Der Gefahrenbereich 34 ist durch einen Zaun 36 räumlich abgegrenzt, der als Teil eines Zugangskontrollsystems 16 dient. Der Zaun 36 ist mit einer Tür 38 versehen, über die autorisierte Personen den Gefahrenbereich betreten können. An der Tür 38 ist ein Türschalter 40 angebracht, der bei geschlossener Tür ein Energiesparsignal an ein Energiesparmodul 10 sendet.

Das Energiesparmodul 10 ist in diesem Ausführungsbeispiel in einen sicherheitstechnischen Sensor 12 integriert, welcher als Smart Sensor in Form eines sicherheitsgerichteten Radarsensors ausgebildet ist. Der Sensor 12 ist zur Überwachung des Gefahrenbereichs 34 vorgesehen und erfasst Bewegungen oder das Eindringen von Personen, typischerweise durch radarbasierte Detektionstechnologie mit integrierter Signalauswertung. Aufgrund der komplexen Auswertealgorithmen und hochauflösenden Sensortechnik weisen derartige Smart Sensoren im Dauerbetrieb einen vergleichsweise hohen Energieverbrauch auf.

Das gezeigte Zugangskontrollsystem 16 ist so ausgelegt, dass bei geschlossener Tür 38 davon ausgegangen werden kann, dass sich keine Personen im Gefahrenbereich 34 befinden. In dieser Situation kann das über den Türschalter 40 erzeugte Energiesparsignal genutzt werden, um den Sensor 12 über das integrierte Energiesparmodul 10 in einen Energiesparmodus zu versetzen. In diesem Zustand wird die Sensorfunktion ganz oder teilweise deaktiviert, während über eine Simulationseinrichtung im Energiesparmodul 10 simulierte sicherheitsgerichtete Signale erzeugt und an eine nicht dargestellte Sicherheitssteuerung weitergeleitet werden. Diese Signale entsprechen dem Normalbetrieb, sodass die Sicherheitssteuerung keine Beeinträchtigung erkennt.

Dieses Konzept bietet den Vorteil, dass selbst komplexe, hochleistungsfähige sicherheitstechnische Sensoren wie radar- oder kamerabasierte Systeme energieeffizient betrieben werden können, ohne das Sicherheitsniveau zu beeinträchtigen oder Eingriffe in sicherheitsgerichtete Steuerungskreise vornehmen zu müssen.

Andere Ausprägungen des gezeigten Ausführungsbeispiels können beispielsweise ein Zugangskontrollsystem umfassen, das zusätzlich eine RFID-basierte Zutrittserkennung, BLE-Ortungseinheiten, oder präsenzbasierte Schalter umfasst. Alternativ zum Radarsensor kann der sicherheitstechnische Sensor 12 auch als sicherheitsgerichtetes Kamerasystem mit Bildauswertung, 3D-LiDAR, Lichtvorhang oder sicherheitszertifizierter Ultraschallsensor ausgebildet sein.

Der Zaun 36 kann zusätzlich mit einer elektronischen Verriegelung ausgestattet sein, die durch das Energiesparmodul angesteuert wird. Die Tür 38 kann mit einer zweikanaligen Sicherheitszuhaltung oder einem elektrisch überwachten Positionsschalter versehen sein. Ferner kann die externe Einrichtung 16 über industrielle Kommunikationsschnittstellen wie IO-Link Safety, PROFIsafe, EtherCAT FSoE oder Safety-over-TCP/IP mit dem Energiesparmodul kommunizieren.

In einer weiteren Ausgestaltung kann das Energiesparmodul nicht in den Sensor 12 integriert, sondern als separate Geräteeinheit zwischen Sensor 12 und Sicherheitssteuerung angeordnet sein. Auch eine softwarebasierte Realisierung als Teil eines übergeordneten Edge- oder Feldcontrollers ist denkbar, insbesondere in modularen Systemarchitekturen.

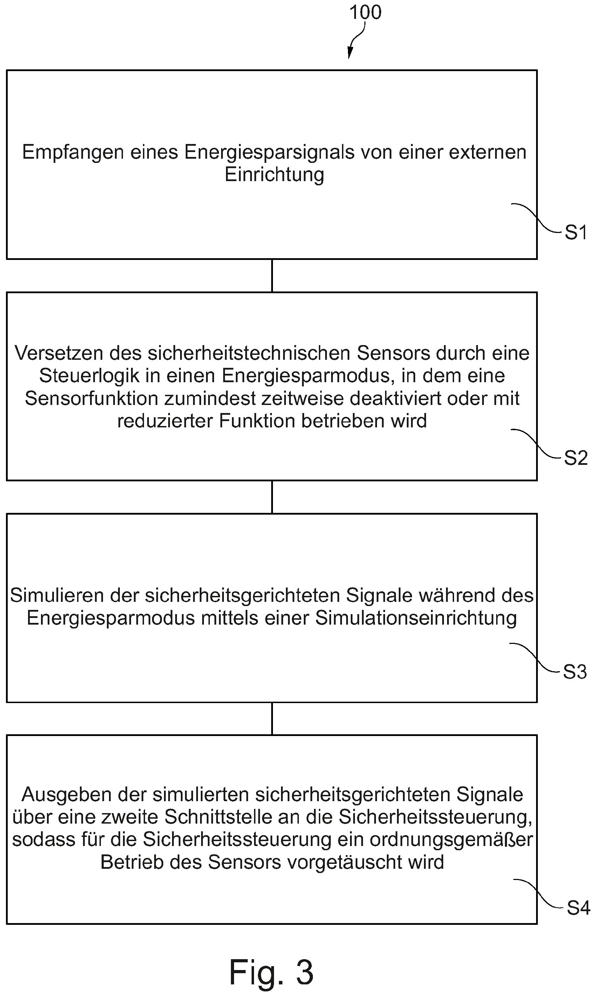

Fig. 3 zeigt ein Ablaufdiagramm eines Verfahrens 100 zum energieeffizienten Betrieb eines sicherheitstechnischen Sensors gemäß einem Aspekt der vorliegenden Offenbarung.

In Schritt S1 wird ein Energiesparsignal von einer externen Einrichtung empfangen. Diese kann beispielsweise eine Zeitsteuerung, ein Funkortungssystem, ein anderes übergeordnetes Steuergerät oder ein Zugangskontrollsystem sein, wie es etwa in dem System gemäß Fig. 2 gezeigt ist.

In Schritt S2 wird der sicherheitstechnische Sensor durch eine Steuerlogik in einen Energiesparmodus versetzt. In diesem Modus ist die eigentliche Sensorfunktion zumindest zeitweise deaktiviert oder wird mit reduzierter Leistungsaufnahme betrieben. Dies kann z. B. durch Abschalten der Sensoreinheit, Begrenzung der Abtastrate oder Reduzierung der Rechenlast in einem Smart Sensor erfolgen.

In Schritt S3 werden mittels einer Simulationseinrichtung sicherheitsgerichtete Signale erzeugt, die den Signalen entsprechen, die der Sensor im Normalbetrieb ausgeben würde. Diese Signale werden unabhängig von der tatsächlichen Aktivität des Sensors generiert.

In Schritt S4 werden die simulierten sicherheitsgerichteten Signale über eine zweite Schnittstelle an eine Sicherheitssteuerung ausgegeben. Diese erkennt aufgrund der Übereinstimmung mit dem Normalverhalten keinen Unterschied zum realen Sensorbetrieb, wodurch für die Sicherheitssteuerung ein ordnungsgemäßer Sensorbetrieb vorgetäuscht wird.

Die vorangehend beschriebenen Ausführungsformen sowie die in den Figuren gezeigten Darstellungen dienen lediglich der Veranschaulichung der technischen Lehre und sollen die Erfindung nicht auf die konkret gezeigten oder beschriebenen Beispiele beschränken. Vielmehr sind im Rahmen des durch die Ansprüche definierten Schutzumfangs auch andere Ausgestaltungen, Kombinationen und Varianten möglich, ohne den Kern der Erfindung zu verlassen.

Insbesondere können einzelne Merkmale der beschriebenen Ausführungsformen beliebig miteinander kombiniert oder voneinander getrennt betrachtet werden, sofern sich daraus keine technischen Widersprüche ergeben. Die dargestellten Figuren dienen dabei ausschließlich der schematischen Illustration und erheben keinen Anspruch auf maßstäbliche oder vollständige Darstellung aller erfindungswesentlichen Merkmale.

Maßgeblich für den Schutzbereich der Erfindung ist ausschließlich der Inhalt der nachfolgenden Patentansprüche in ihrer jeweils geltenden Fassung.

### Bezugszeichenliste:

- 10: Energiesparmodul
- 12: Sicherheitstechnischer Sensor / Smart Sensor / Radarsensor
- 14: Sicherheitssteuerung
- 16: Externe Einrichtung / Zugangskontrollsystem
- 18: Erste Schnittstelle (zum Empfangen des Energiesparsignals)
- 20: Steuerlogik
- 22: Simulationseinrichtung
- 24: Zweite Schnittstelle (zum Ausgeben der simulierten Signale)
- 26: Verbindung zur Umschaltung des Sensors in den Energiesparmodus
- 28: Signalleitung zur Sicherheitssteuerung (sicherheitsgerichtete Signale)
- 29: Verbindung zur Rückführung aufgezeichneter Sensordaten
- 30: Signalleitung zur Sicherheitssteuerung (simulierte sicherheitsgerichtete Signale)
- 31: Dritte Schnittstelle (Testeingang)
- 32: Industrieroboter
- 34: Gefahrenbereich
- 36: Zaun
- 38: Tür
- 40: Türschalter

## Patentansprüche

1. Energiesparmodul (10) für einen sicherheitstechnischen Sensor (12), der zur Überwachung eines Gefahrenbereichs (34) vorgesehen ist und sicherheitsgerichtete Signale an eine Sicherheitssteuerung (14) abgibt, aufweisend:
eine erste Schnittstelle (18) zum Empfangen eines Energiesparsignals von einer externen Einrichtung (16),
eine Steuerlogik (20), die eingerichtet ist, bei Vorliegen des Energiesparsignals den sicherheitstechnischen Sensor (12) in einen Energiesparmodus zu versetzen, in dem eine Sensorfunktion des sicherheitstechnischen Sensors (12) zumindest zeitweise deaktiviert oder mit reduzierter Funktion betrieben wird,
eine Simulationseinrichtung (22), die eingerichtet ist, während des Betriebs im Energiesparmodus simulierte sicherheitsgerichtete Signale bereitzustellen, und
eine zweite Schnittstelle (24) zum Ausgeben der simulierten sicherheitsgerichteten Signale an die Sicherheitssteuerung (14).

2. Energiesparmodul nach Anspruch 1, wobei die Simulationseinrichtung (22) eingerichtet ist, im Energiesparmodus ausbleibende sicherheitsgerichtete Signale des sicherheitstechnischen Sensors (12) durch simulierte sicherheitsgerichtete Signale zu ersetzen, um der Sicherheitssteuerung (14) einen normalen Betrieb des sicherheitstechnischen Sensors (12) vorzutäuschen.

3. Energiesparmodul nach einem der vorhergehenden Ansprüche, wobei die simulierten sicherheitsgerichteten Signale einem Echtzeitprotokoll des sicherheitstechnischen Sensors (12) entsprechen und insbesondere zyklisch mit einem vorgegebenen Taktsignal ausgegeben werden.

4. Energiesparmodul nach einem der vorhergehenden Ansprüche, wobei die Steuerlogik (20) eingerichtet ist, den sicherheitstechnischen Sensor (12) in definierten, insbesondere in regelmäßigen, Zeitabständen kurzzeitig zu aktivieren, um eine Funktionsprüfung durchzuführen.

5. Energiesparmodul nach einem der vorhergehenden Ansprüche, weiter umfassend eine dritte Schnittstelle (31) zum Empfangen eines Testsignals, wobei die Steuerlogik (20) eingerichtet ist, bei Vorliegen des Testsignals die simulierten sicherheitsgerichteten Signale für einen Testfall anzupassen, insbesondere wobei die Steuerlogik (20) eingerichtet ist, die simulierten sicherheitsgerichteten Signale nur dann an den Testfall anzupassen, wenn eine Funktionsprüfung des sicherheitstechnischen Sensors (12) erfolgreich war.

6. Energiesparmodul nach einem der vorhergehenden Ansprüche, wobei das Energiesparsignal von einem Zugangskontrollsystem (40), einer Anwesenheitserkennung oder einer übergeordneten Steuerungseinheit generiert wird.

7. Energiesparmodul nach einem der vorhergehenden Ansprüche, wobei die Steuerlogik (20) eingerichtet ist, anhand vordefinierter Zeitintervalle oder Benutzerprofile den Energiesparmodus automatisch zu aktivieren oder zu deaktivieren.

8. Energiesparmodul nach einem der vorhergehenden Ansprüche, wobei die Steuerlogik (20) eingerichtet ist, auf eine Künstliche Intelligenz zuzugreifen, welche auf Basis von Prozessdaten oder Bewegungsmustern vorhersagt, ob sich Personen im Gefahrenbereich befinden, und den Energiesparmodus in Abhängigkeit dieser Vorhersage automatisch zu aktivieren oder zu deaktivieren.

9. Energiesparmodul nach einem der vorhergehenden Ansprüche, wobei die Simulationseinrichtung (22) eingerichtet ist, auf zuvor während eines Normalbetriebs aufgezeichnete Kommunikationsdaten des sicherheitstechnischen Sensors zurückzugreifen, um auf deren Grundlage in dem Energiesparmodus die simulierten sicherheitsgerichteten Signale zu erzeugen.

10. Energiesparmodul nach einem der vorhergehenden Ansprüche, wobei das Energiesparmodul als integrierter Bestandteil des sicherheitstechnischen Sensors (12) ausgebildet ist, oder wobei das Energiesparmodul als separate, vom sicherheitstechnischen Sensor (12) unabhängige Einheit ausgestaltet ist, die zwischen dem Sensor (12) und der Sicherheitssteuerung (14) angeordnet ist.

11. Energiesparmodul nach einem der vorhergehenden Ansprüche, wobei die sicherheitsgerichteten Signale, die vom sicherheitstechnischen Sensor (12) in einem Normalbetrieb erzeugt werden, redundante OSSD-Signale (Output Signal Switching Device) sind, und wobei die Simulationseinrichtung (22) eingerichtet ist, während des Energiesparmodus OSSD-kompatible Ausgangssignale zu erzeugen, welche die OSSD-Signale des Sensors vollständig ersetzen.

12. Energiesparmodul nach einem der vorhergehenden Ansprüche, wobei die Simulationseinrichtung so ausgestaltet ist, dass beim Übergang des sicherheitstechnischen Sensors in den Energiesparmodus eine unterbrechungsfreie Fortführung der sicherheitsgerichteten Signale erfolgt, wobei die simulierten Signale nahtlos an die zuvor vom Sensor (12) erzeugten Signale anschließen, sodass für die Sicherheitssteuerung (14) kein Übergang oder Funktionswechsel erkennbar ist.

13. Energiesparmodul nach einem der vorhergehenden Ansprüche, wobei das Energiesparmodul (10) ferner dazu eingerichtet ist, eine Verbindung (28) zwischen dem Sensor (12) und der Sicherheitsteuerung (14) während des Betriebs im Energiesparmodus aufzutrennen.

14. System zur sicherheitstechnischen Überwachung eines Gefahrenbereichs (34) unter gleichzeitiger Möglichkeit zur Reduktion des Energieverbrauchs, aufweisend:
ein Energiesparmodul (10) nach einem der Ansprüche 1 bis 13,
einen sicherheitstechnischen Sensor (12), der dazu eingerichtet ist, in einem Normalbetrieb sicherheitsgerichtete Signale abzugeben,
eine Sicherheitssteuerung (14), welche zur Auswertung der sicherheitsgerichteten Signale und zur Durchführung sicherheitsgerichteter Reaktionen konfiguriert ist, sowie
eine externe Einrichtung (16), die eingerichtet ist, ein Energiesparsignal an das Energiesparmodul zu übermitteln, insbesondere wobei die externe Einrichtung (16) ein Zugangskontrollsystem, eine Steuerungseinheit, eine Zeitsteuerung oder ein Ortungssystem ist.

15. System nach Anspruch 14, wobei das Energiesparmodul (10) in den sicherheitstechnischen Sensor (12) integriert ist und gemeinsam mit diesem eine einheitliche Baueinheit bildet, insbesondere wobei der sicherheitstechnische Sensor (12) über einen zusätzlichen Eingangsanschluss verfügt, der zum Empfangen des Energiesparsignals von der externen Einrichtung (16) ausgebildet und mit der ersten Schnittstelle (18) des Energiesparmoduls (10) gekoppelt ist.

16. System nach Anspruch 15, wobei die zweite Schnittstelle (24) des Energiesparmoduls mit einem oder mehreren Ausgangsanschlüssen, über die der sicherheitstechnische Sensor (12) in einem Normalbetrieb die sicherheitsgerichteten Signale an die Sicherheitssteuerung (14) abgibt, gekoppelt ist.

17. Verfahren (100) zum energieeffizienten Betrieb eines sicherheitstechnischen Sensors (12), der zur Überwachung eines Gefahrenbereichs (34) vorgesehen ist und sicherheitsgerichtete Signale an eine Sicherheitssteuerung (14) abgibt, umfassend die Schritte:
- Empfangen (S1) eines Energiesparsignals von einer externen Einrichtung (16) über eine erste Schnittstelle (18),
- Versetzen (S2) des sicherheitstechnischen Sensors (12) durch eine Steuerlogik (20) in einen Energiesparmodus, in dem eine Sensorfunktion zumindest zeitweise deaktiviert oder mit reduzierter Funktion betrieben wird,
- Simulieren (S3) der sicherheitsgerichteten Signale während des Energiesparmodus mittels einer Simulationseinrichtung (22), und
- Ausgeben der simulierten sicherheitsgerichteten Signale über eine zweite Schnittstelle (24) an die Sicherheitssteuerung, sodass für die Sicherheitssteuerung (14) ein ordnungsgemäßer Betrieb des Sensors vorgetäuscht wird.
